# EUROPÄISCHE PATENTANMELDUNG

(11) **EP 0 990 820 A2**
(43) Veröffentlichungstag der Anmeldung: **05.04.2000**
(21) Anmeldenummer: 99890309.0
(22) Anmeldetag: 28.09.1999
(51) Int. Cl.: F16H 57/04, H02K 9/19

(54) **Motorgetriebeeinheit mit gemeinsamer Kühlung**

(30) Priorität: 02.10.1998 AT 165298
(71) Anmelder: DaimlerChrysler AG, 70567 Stuttgart (DE)
(72) Erfinder: Neudorfer, Harald, Dipl.-Ing., Dr., 2354 Traiskirchen (AT); Gukenbiehl, Karl L., Dipl.-Ing., 2371 Hinterbrühl (AT)
(74) Vertreter: Köhler-Pavlik, Johann, Dipl.-Ing.

(57) **Zusammenfassung**

Die Erfindung betrifft einen Antrieb mit einem in einem Motorgehäuse (3) angeordneten Motor (1) und einem daran angeschlossenen, in einem Getriebegehäuse (4) angeordneten Getriebe (2), allenfalls mit einem mit dem Getriebegehäuse (4) lösbar verbundenen Getriebedeckel (19), wobei zumindest in einem Teil des Getriebegehäuses (4) und bzw. oder im Getriebedeckel (19) Kühlkanäle (5) zur Führung eines vorzugsweise flüssigen Kühlmittels angeordnet sind. Zur möglichst einfachen und effizienten Steigerung der Leistungsausbeute des Antriebes ist erfindungsgemäß vorgesehen, daß die Kühlkanäle (5) im Getriebegehäuse (4) und bzw. oder Getriebedeckel (19) mit Kühlkanälen im Motorgehäuse (3) zur Kühlung des Motors (1) verbunden sind. Durch die gemeinsame Kühlung von Motor (1) und Getriebe (2) erfolgt eine effiziente Wärmeabfuhr bei gleichzeitig herstellungstechnischen Vorteilen und Vermeidung von Dichtungsproblemen. Vorteilhafterweise sind die Kühlkanäle (5) im Getriebegehäuse (4) und bzw. oder Getriebedeckel (19) integriert. Weitere Verbesserungen können durch eine thermostatgeregelte Getriebekühlung erzielt werden.

## Beschreibung

Die Erfindung betrifft einen Antrieb nach dem Oberbegriff des Patentanspruchs 1.

Das vom Motor erzeugte Drehmoment wird über das Getriebe auf den anzutreibenden Teil, z.B. auf die anzutreibende Achse eines Fahrzeuges übertragen, wobei dabei durch entsprechende Untersetzung die üblicherweise relativ hohe Drehzahl des Motors herabgesetzt wird. Wie bei allen bewegten Systemen wird auch bei derartigen Antrieben ein Teil der Energie in Wärme umgewandelt, welche die Leistungsausbeute der Antriebe begrenzt. Die Wärme wird sowohl im Motor als auch im Getriebe durch Reibungsverluste hervorgerufen. Insbesondere bei Anwendungen mit hohen Leistungen, wie zum Beispiel beim Antrieb von Schienenfahrzeugen, sind die Wärmeverluste relativ hoch. Durch Reduktion der auftretenden Wärmeverluste einerseits und durch geeignetes Abführen der Verlustwärme andererseits kann die Leistungsausbeute gesteigert werden. Das Abführen der Wärme geschieht durch unterschiedliche Kühlmethoden.

Beginnend von einfachen luftgekühlten Antrieben wurden auch Flüssigkeitskühlungen entwickelt. Beispielsweise beschreibt die AT 403 864 B ein Kühlsystem für elektrische Maschinen, bei der die hohle Rotorwelle von einem über eine Düse eingebrachtes Kühlmittel durchströmt und somit gekühlt wird. Damit ist eine effiziente Kühlung der Maschine vom Rotor her beispielsweise unter Verwendung von Gleitringdichtungen ohne Auftreten hoher Leckverluste möglich. Eine wirkungsvolle Flüssigkeitskühlung für elektrische Maschinen ist beispielsweise auch in der WO 97/44882 Al beschrieben, wonach Kühlkanäle in dem durch Gießen oder Sintern hergestellten Gehäuse der Maschine untergebracht sind und für einen geeigneten Verlauf der Kühlflüssigkeit entsprechend miteinander verbunden sind. Darüber hinaus werden bei der Herstellung des Motorgehäuses Kühlrippen zur weiteren Kühlung vorgesehen. Neben einer Kühlflüssigkeit wird im Falle eines Motors mit Getriebe auch das Getriebeöl zur Kühlung verwendet. Zur Vermeidung externer Pumpen ist beispielsweise nach der EP 0 785 612 Al eine Konstruktion entwickelt worden. bei der das Getriebeöl aus dem Ölsumpf des Getriebekastens über das Großrad des Getriebes in den Motor befördert wird. Bei derartigen Kühlungen ist die Abführung der Wärme des Getriebeöls meist ungenügend, weshalb die Leistung des Antriebs nur beschränkt gegenüber baugleichen, ungekühlten Maschinen gesteigert werden kann. Abhilfe wurde durch aufwendige Konstruktionen geschaffen, welche den Getriebekasten mit einem Wärmetauscher kühlen.

Zur Verbesserung der Wärmeabfuhr bei Motoren und Getrieben wurden verschiedene Maßnahmen entwickelt. Die DE 33 31 131 A1 betrifft beispielsweise eine Kühleinrichtung für Antriebsachsen, bei der das Getriebegehäuse von einem an einen Kühlmittelkreislauf angeschlossenen Kühlmantel umgeben ist, wodurch für eine ausreichende Wärmeabfuhr vom Achsgetriebe gesorgt wird. Die DE 36 06 963 C2 beschreibt einen Maschinengehäusemantel als Ölkühler, der doppelwandig und ölgekühlt ausgeführt sein kann. Das Getriebe gemäß der DE 42 12 243 A1 zeigt einen mit einem Kühlmittelkreislauf verbundenen Kühlmantel im Getriebedeckel für eine verbesserte Wärmeabfuhr. Der Getriebedeckel kann wahlweise an ein vorhandenes Getriebegehäuse angeflanscht werden. Die EP 0 853 225 A2 beschreibt einen externen Kühler für Getriebeöl, wobei das Gehäuse des Wärmetauschers als Getriebedeckel einsetzbar ist, sodaß sich eine sehr einfache und gewichtssparende Ausführung ergibt. Aus der DE 41 25 079 C2 ist ein Ölkühler für ein automatisches Getriebe ersichtlich. Die US 5 099 715 A beschreibt einen Getriebekasten für den Antrieb eines Lastkraftwagens, der durch einen speziellen Verlauf des Getriebeöls für eine gute Schmierung charakterisiert ist. Das Getriebegehäuse enthält Hohlräume, in denen das Getriebeöl geführt wird und daher auch zur Kühlung des Getriebes dient. Schließlich beschreibt die US 4 872 502 A eine Luftkühlung eines Getriebes umfassend ein geschlossenes Gehäuse, welches mit einem Lufteinlaß versehen ist, in welchen beispielsweise mittels eines Ventilators Luft eingeblasen wird.

Die Aufgabe der vorliegenden Erfindung liegt darin, die Leistungsausbeute des Antriebes gegenüber herkömmlichen Konstruktionen mit gleicher Baugröße weiter zu steigern. Darüber hinaus soll sich die erfindungsgemäße Konstruktion durch einen möglichst einfachen und somit kostengünstigen Aufbau auszeichnen. Damit verbunden soll der Wartungs- und Serviceaufwand des Antriebs möglichst gering sein. Nachteile bekannter Konstruktionen sollen vermieden oder zumindest reduziert werden.

Gelöst wird die erfindungsgemäße Aufgabe dadurch. daß die Kühlkanäle im Getriebegehäuse und bzw. oder Getriebedeckel mit Kiihlkanälen im Motorgehäuse zur Kühlung des Motors verbunden sind. Durch die erfindungsgemäße gemeinsame Kühlung von Motor und Getriebe erfolgt eine effiziente Wärmeabfuhr, wodurch die Leistungsausbeute des Antriebs gesteigert werden kann. Gleichzeitig ergeben sich herstellungstechnische Vorteilen und können Dichtungsprobleme vermieden werden. Die Kühlkanäle können in Form von Kühlschlangen im Getriebe- oder Motorgehäuse oder in einem als Doppelmantel ausgebildeten Getriebe- oder Motorgehäuse angeordnet sein und sind relativ einfach und kostengünstig herstellbar und bedürfen keinem bzw. im wesentlichen keinem Service oder Wartung. Die Kühlung im Inneren des Getriebekastens und Motorgehäuses ist wesentlich effizienter als beispielsweise eine reine Luftkühlung durch außen am Getriebegehäuse angeordnete Kühlrippen od. dgl. Die erfindungsgemäße Konstruktion entspricht einem im Getriebe integrierten Wärmetauscher, wodurch die Wärmeabfuhr gesteigert und der Aufwand für die Kühlung gesenkt wird. Durch die erfindungsgemäße Konstruktion kann natürlich auch die Baugröße des Antriebs für eine vorgegebene Leistung entsprechend reduziert werden. Die Reduktion von Volumen und Gewicht des Antriebs bringt bei vielen Anwendungen Vorteile mit sich und hilft Kosten zu sparen. Insbesondere bei Antrieben für Fahrzeuge ist damit der Vorteil der Reduktion der unabgefederten Massen verbunden. Weiters kann durch die erfindungsgemäße Konstruktion erreicht werden, daß das Getriebeöl nur mehr geringere Temperaturschwankungen durchmacht. Bei herkömmlichen Antrieben muß das Getriebeöl für einen relativ weiten Temperaturbereich von beispielsweise -20°C bis +80°C ausgelegt werden, was sich negativ auf die Lebensdauer des Getriebeöls und die Verschleißeigenschaften des Getriebes auswirkt. Allfällige Verbindungsstellen der Kühlkanäle im Getriebegehäuse mit den Kühlkanälen des Getriebedeckels müssen zur Vermeidung hoher Leckverluste abgedichtet werden. Dies kann beispielsweise durch Zwischenlage von O-Ringen oder Dichtmaterialien erfolgen. Bei Beheizung beispielsweise eines Fahrzeuges mit der Verlustwärme des Motors und des Getriebes kann durch die Erfindung die Wärmerückgewinnung noch effizienter als bisher gestaltet werden. Dadurch wird der Gesamtwirkungsgrad des Fahrzeuges erhöht. Das Kühlmedium, vorzugsweise das Wasser-Glykol-Gemisch zirkuliert durch eine externe Pumpe gefördert in dem Kühlkreislauf und wird an einer geeigneten Stelle des externen Kreislaufs gekühlt.

Vorteilhafterweise sind die Kühlkanäle im Getriebegehäuse und bzw. oder Getriebedeckel integriert. Dadurch ergibt sich eine optimale Kühlwirkung und gleichzeitig eine billige Möglichkeit der Herstellung der Kühlkanäle in einem Arbeitsgang mit dem Getriebegehäuse oder Getriebedeckel.

Bei einer kombinierten Motor-/Getriebekühlung kann eine Regelung der Getriebekühlung erreicht werden, wenn parallel zu dem durch die Kühlkanäle des Getriebegehäuses und bzw. oder Getriebedeckels gebildeten Getriebekühlkreislauf eine Überbrückungsleitung vorgesehen ist, wobei in dieser Überbrückungsleitung oder in zumindest einem der Kühlkanäle des Getriebes ein Ventil od. dgl. zur Unterbrechung des Durchflusses des vorzugsweise flüssigen Kühlmittels angeordnet ist. Somit kann die Kühlung des Getriebes in Abhängigkeit der Temperatur geregelt werden und erreicht werden, daß das Getriebe erst ab Erreichen einer idealen Betriebstemperatur und nicht bereits von Anfang an gekühlt wird. Damit werden die optimalen Schmiereigenschaften des Getriebeöls ausgenützt, die erst ab einer bestimmten Temperatur eintreten.

Vorteilhafterweise ist das Ventil als elektronisches Ventil ausgebildet und mit einem vorzugsweise im Getriebegehäuse angeordneten Temperatursensor verbunden.

Eine wirkungsvolle Kombination einer Motorkühlung mit der erfindungsgemäßen Getriebekühlung kann dadurch erfolgen, daß das Getriebegehäuse an der, dem Motor zugewandten Seite Leitungen aufweist, welche mit den Kühlkanälen im Getriebegehäuse verbunden sind, sodaß diese mit allfälligen Kühlkanälen im Motorgehäuse verbindbar sind. Durch diese Anordnung kann ein allenfalls im Motor angeordneter Kühlkreislauf einfach mit dem erfindungsgemäßen Kühlkreislauf im Getriebegehäuse kombiniert werden. Bei der Verbindungsstelle zwischen Getriebegehäuse und Motorgehäuse sind O-Ringe od. dgl. zur Abdichtung einzusetzen.

Vorteilhafterweise sind das Motorgehäuse und das Getriebegehäuse einstückig als gemeinsames Gehäuse ausgebildet. wobei in dem gemeinsamen Gehäuse die Kühlkanäle und allenfalls eine Überbrückungsleitung angeordnet sind. Diese Konstruktion bildet einen einfach und rasch herzustellenden Antrieb, dessen Leistungsausbeute gegenüber herkömmlichen Antrieben gleicher Baugröße durch Integration einer entsprechenden Kühlung wirkungsvoll gesteigert werden kann. Durch die einstückige Ausbildung sind keine Dichtungen zur Abdichtung der Verbindungen der Kühlkanäle des Motorgehäuses und des Getriebegehäuses notwendig. Dies bedingt auch einen niedrigeren Montage- und Wartungsaufwand.

Zur weiteren Vereinfachung der Herstellung des gesamten Antriebes können weitere Bestandteile des Antriebs gleich im gemeinsamen Gehäuse vorgesehen und mit diesem in einem Arbeitsgang hergestellt werden. Beispielsweise kann im gemeinsamen Gehäuse des Motors und des Getriebes eine berührungslose Dichtung, z.B. eine Labyrinthdichtung zur Abdichtung des Getrieberaumes gegenüber dem Motorraum vorgesehen sein.

Ebenso können auf dem gemeinsamen Gehäuse, allenfalls auf dem Getriebedeckel und allenfalls auf einem mit dem Motorgehäuse lösbar verbundenen Lagerschild innenseitig und/oder außenseitig Rippen od. dgl. zur Versteifung und bzw. oder Verbesserung der Kühlwirkung angeordnet sein. Außen angeordnete Rippen haben insbesondere Versteifungswirkung, während innen angeordnete Rippen durch Vergrößerung der inneren Oberfläche insbesondere zur Verbesserung der Kühlwirkung beitragen, womit die Leistungsausbeute des Antriebs weiter gesteigert werden kann.

Vorteilhafterweise sind die Kühlkanäle im Getriebegehäuse, Motorgehäuse oder gemeinsamen Gehäuse, allfällige Überbrückungsleitungen, Leitungen, Zuleitungen und Rückleitungen sowie allfällige Rippen od. dgl. im Getriebegehäuse, Motorgehäuse oder gemeinsamen Gehäuse mit diesem in einem Arbeitsvorgang durch Gießen oder Sintem hergestellt. Solche durch Gießen oder Sintem hergestellte Antriebe benötigen nach dem Gießvorgang nur mehr wenig Nachbearbeitung. Gießen ist ein sehr wirtschaftliches und übliches Herstellungsverfahren derartiger Antriebe. Alternativ zum Gießen ist auch Sintem möglich, wobei ein Granulat eines bestimmten Materials mit bestimmter Temperatur und bestimmtem Druck in eine Form gepreßt wird.

Dabei werden die Kühlkanäle, allfällige Überbrückungsleitungen, Leitungen, Zuleitungen und Rückleitungen vorzugsweise durch Rohre gebildet, welche aus einem Material mit höherem Schmelzpunkt als das Material des Getriebegehäuses, Motorgehäuses oder gemeinsamen Gehäuses bestehen. Durch diese Anordnung wird eine einfache und kostengünstige Herstellung erzielt, da keine Nachträgliche Bohr- oder Fräsbearbeitung der Kühlkanäle erforderlich ist. Darüber hinaus ist eine gute Wärmeübetragung vom Motor bzw. Getriebe auf das Kühlmedium und somit eine optimale Kühlung erzielbar.

Diese und weitere Merkmale der Erfindung werden anhand der beigefügten Abbildungen näher erläutert.

Darin zeigen:
- Fig. 1a bis 1c: das Schema verschiedener Konstruktionen gekühlter Antriebe,
- Fig. 2: eine Ausführungsvariante eines Getriebegehäuses mit Kühlung,
- Fig. 3: eine Ausführungsvariante eines einstückigen Antriebs mit integrierter Kühlung.
- Fig. 4: eine andere Ausführungsvariante des Getriebegehäuses, und
- Fig. 5a bis 5d: schematisch verschiedene Varianten einer kombinierten Getriebe/Motorkühlung mit integriertem Thermostat.

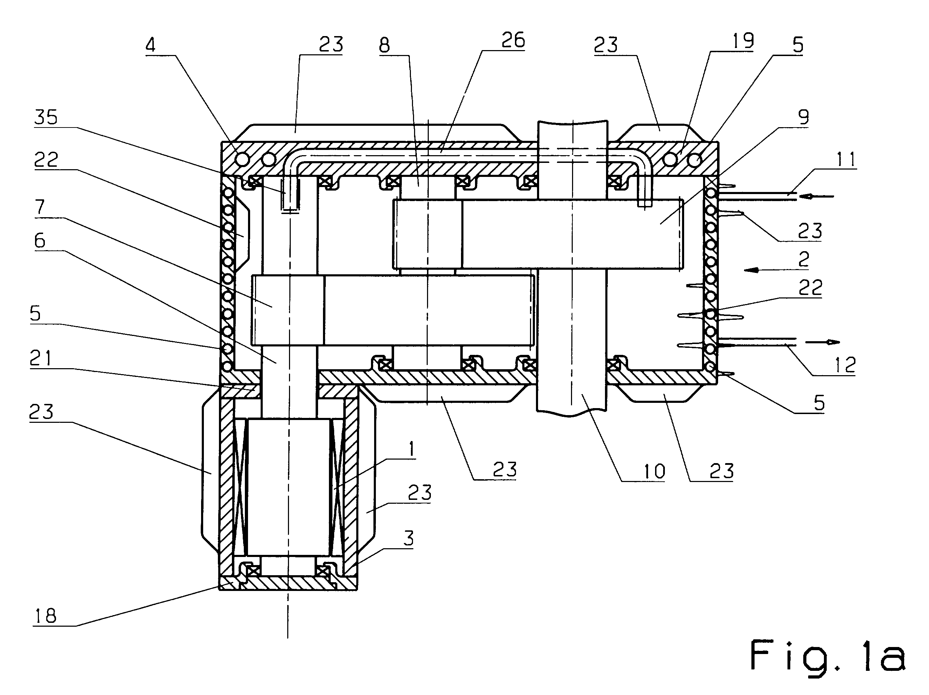

In Fig. 1a ist schematisch ein Antrieb dargestellt, der aus dem Motor 1 und dem Getriebe 2 besteht. Der Motor 1 ist in einem Motorgehäuse 3 und das Getriebe 2 in einem Getriebegehäuse 4 untergebracht. Zur Montage des Motors 1 ist üblicherweise auf der, dem Getriebe 2 abgewandten Seite des Motorgehäuses 3 (d.h. nichtantriebsseitig) ein Lagerschild 18 am Motorgehäuse 3 angeordnet. Ebenso kann das Getriebegehäuse 4 z.B. an der, dem Motor 1 abgewandten Seite des Getriebegehäuses 4 zur Montage und Demontage des Getriebes 2 einen Getriebedeckel 19 aufweisen. Beim Motor 1 kann es sich um eine elektrische Maschine oder um eine Verbrennungskraftmaschine handeln. In den folgenden Ausführungsbeispielen wird nur auf elektrische Maschinen Bezug genommen. Die rotierende Motorwelle 6 ragt aus dem Motorgehäuse 3 in das Getriebegehäuse 4. An der im Getriebegehäuse 4 angeordneten Motorwelle 6 ist ein Kleinrad 7 drehfest mit der Motorwelle 6 verbunden, welches allenfalls über eine Zwischenwelle 8 das Großrad 9 antreibt, welches mit der Antriebswelle 10 drehfest verbunden ist. Die Antriebswelle 10 ist mit dem anzutreibenden Teil, z.B. einem Rad eines Fahrzeuges (nicht dargestellt), verbunden. Zum Zweck der Kühlung des Getriebes 2 mit einem vorzugsweise flüssigen Kühlmittel sind im Getriehegehäuse 4 Kühlkanäle 5 vorgesehen, welche miteinander zu einem Kühlkreislauf verbunden sind. Ein Ende des Kühlkreislaufs ist mit einer Zuleitung 11 und das andere Ende des Kühlkreislaufs mit einer Rückleitung 12 verbunden, über welche das Kühlmedium zu- bzw. abgeführt wird. Der Querschnitt der Kühlkanäle 5 ist vorzugsweise rund oder oval, kann aber theoretisch beliebige Gestalt aufweisen. Als geeignetes Kühlmedium wird Kühlflüssigkeit, insbesondere ein Wasser-Glykol-Gemisch verwendet. Es ist aber auch der Einsatz anderer Kühlflüssigkeiten oder eines gasförmigen Kühlmediums möglich. Die Kühlung des Getriebes 2 kann mit beliebigen Kühlungen des Motors 1 kombiniert werden. Im Getriebedeckel 19 können weitere Kühlkanäle angeordnet sein. Weiters ist im Getriebedeckel 19 eine Leitung 26 zur Einbringung des Getriebeöls aus dem Getrieberaum über eine Düse 35 in die hohl ausgeführte Motorwelle 6 zu deren Kühlung angeordnet. Zur Vermeidung externer Pumpen erfolgt die Förderung des Getriebeöls aus dem Getriebekasten vorteilhafterweise automatisch über die Drehung des Großrades 9. Über eine Labyrinthdichtung 21 wird der Getrieberaum gegenüber dem Motorraum abdichtet. Es können auch Rippen 22, 23 oder dergleichen am Motorgehäuse 3, Getriebegehäuse 4, Lagerschild 18 oder Getriebedeckel 19 vorgesehen sein. Diese sind insbesondere bei der Herstellung durch Gießen oder Sintem leicht berücksichtigbar und erfordern keinen oder nur geringen nachträglichen Arbeitsaufwand. Dabei dienen innen angeordnete Rippen 22 hauptsächlich zur Verbesserung der Kühlung durch Vergrößerung der inneren Oberfläche während außen angeordnete Rippen 23 hauptsächlich zur Verstärkung dienen, wodurch die Bauteile meist mit geringeren Wandstärken ausgeführt werden können und sogar Gewicht eingespart werden kann.

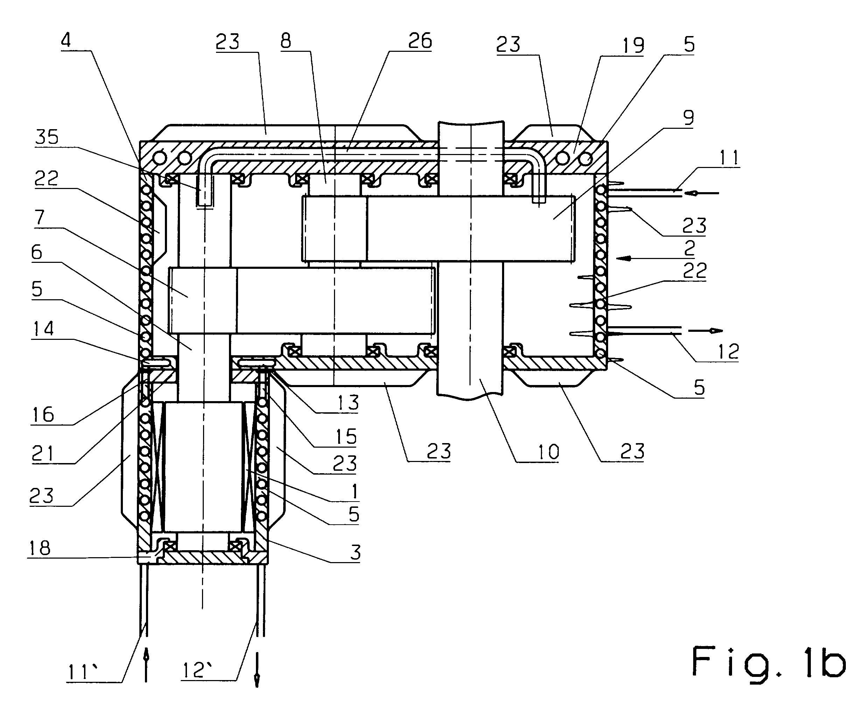

Gemäß der in Fig. 1b dargestellten Ausführungsvariante ist die Kühlung des Getriebes 2 mit der Kühlung des Motors 1 kombiniert. Zu diesem Zweck ist der Kühlkreislauf im Getriebegehäuse 4 mit dem Kühlkreislauf im Motorgehäuse 3 miteinander verbunden, sodaß ein gemeinsamer Kühlkreislauf für den gesamten Antrieb resultiert. Wie in Fig. 1b dargestellt, ist eine mit dem Kühlkreislauf des Getriebes verbundene Leitung 13 der Getriebekühlung so angeordnet, daß sie bei Zusammenbau des Motors 1 und des Getriebes 2 mit der Leitung 15, welche mit dem Kreislauf der Motorkühlung verbunden ist, übereinstimmt. Ebenso fällt die Leitung 14 der Getriebekühlung mit der Leitung 16 der Motorkühlung zusammen. Natürlich können mehr Verbindungen der beiden Kühlkreisläufe vorgesehen sein. Die Verbindung wird vorteilhafterweise abgedichtet, beispielsweise mit Hilfe von O-Ringen od. dgl. (nicht dargestellt). Die Verbindung kann aber auch als Steckverbindung ausgeführt sein. Der resultierende gemeinsame Kühlkreislauf für Motor 1 und Getriebe 2 weist eine Zuleitung 11 und eine Rückleitung 12 am Getriebegehäuse 4 auf, über welche das Kühlmedium eingebracht bzw. abgeführt wird. Alternativ dazu kann auch am Motorgehäuse 3 die gemeinsame Zuleitung 11' oder die Rückleitung 12' angeordnet sein. Auch eine Kombination einer Zuleitung 11 am Getriebegehäuse 4 und einer Rückleitung 12' am Motorgehäuse 3 ist möglich. Auch können mehr als eine Zuleitung 11, 11' und Rückleitung 12, 12' zur Verbindung des gemeinsamen Kühlkreislaufes nach außen vorgesehen sein.

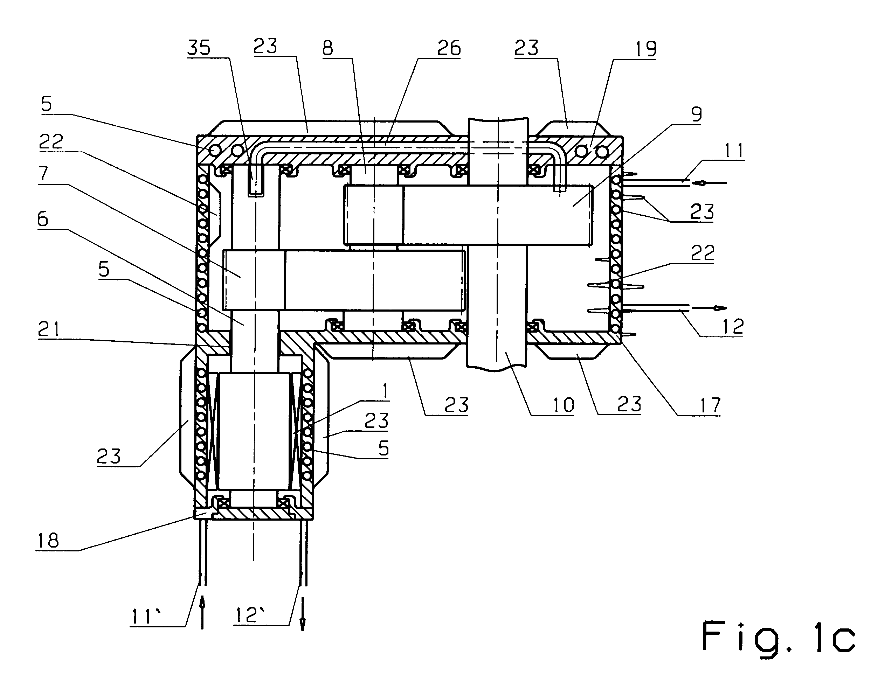

Fig. 1c zeigt eine besonders vorteilhafte Ausführungsform des erfindungsgemäßen Antriebes, bei dem der Motor 1 und das Getriebe 2 in einem gemeinsamen Gehäuse 17 untergebracht sind. Dadurch kann in einem Herstellungsvorgang, insbesondere in einem Gieß- oder Sintervorgang dieses Gehäuse 17 gefertigt werden, wobei ein gemeinsamer Kühlkreislauf für die Kühlung des Motors 1 und Getriebes 2 integriert werden kann. Die Kühlkanäle 5 sind im gemeinsamen Gehäuse 17 so angeordnet, daß sie einen geschlossenen Kühlkreislauf bilden, ohne daß Verbindungsleitungen erforderlich sind. Durch die Einstückigkeit des Gehäuses 17 können keine Leckverluste des Kühlmediums an Verbindungsstellen auftreten. Zur Montage und Demontage des Motors 1 und Getriebes 2 sind gezwungenermaßen Öffnungen in dem gemeinsamen Gehäuse 17 erforderlich, welche durch das Lagerschild 18 und den Getriebedeckel 19 abgeschlossen werden. Auch das Lagerschild 18 und der Getriebedeckel 19 können Teile der Kühlkanäle, Zuleitungen 11' Rückleitungen 12' beinhalten, welche vorteilhafterweise in einem Arbeitsgang mit denselben hergestellt werden. Wie bereits bei Fig. 1a erwähnt, können auch hier Rippen 22, 23 oder dergleichen am gemeinsamen Gehäuse 17, Lagerschild 18 oder Getriebedeckel 19 vorgesehen und mit dem gemeinsamen Gehäuse 17 in einem Arbeitsgang hergestellt sein.

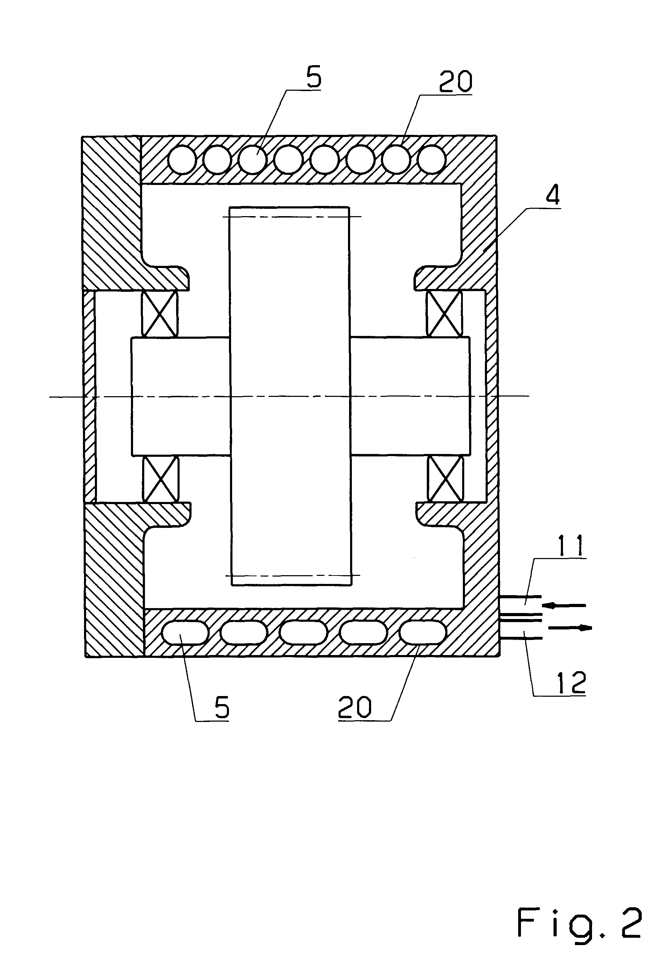

In Fig. 2 ist ein Getriebegehäuse 4 mit Kühlung in geschnittener Seitenansicht dargestellt. Aus fertigungstechnischen Gründen ist es zweckmäßig, die Kühlkanäle 5 im Getriebegehäuse 4 zusammen mit diesem in einem Arbeitsgang herzustellen. Zu diesem Zweck können vor der Herstellung des Getriebegehäuses 4 Rohre 20 in die Gußform des Getriebegehäuses 4 eingelegt werden, welche aus einem Material mit höherem Schmelzpunkt als das Material des Getriebegehäuses 4 gebildet sind. Danach wird das flüssige Material des Getriebegehäuses 4 in die Form eingegossen. Üblich sind die Verwendung von Aluminium bzw. Aluminium-Legierungen für das Getriebegehäuse 4 und beispielsweise Stahl bzw. Stahllegierungen für die Rohre 20. Anstelle der Verwendung von Rohren 20 können auch sogenannte verlorene Formen, beispielsweise aus Sand, als Platzhalter für die Kühlkanäle 5 verwendet werden und diese somit in einem Arbeitsgang zusammen mit dem Getriebegehäuse 4 hergestellt werden. Weiters vorgesehen werden auch zumindest je eine Zuleitung 11 und eine Rückleitung 12 zur Zu- und Rückleitung des Kühlmediums. Die Rohre 20 können den gesamten Kühlkreislauf oder nur Teile davon bilden, wobei im letzten Fall die nachträgliche Verbindung der Teilstücke des Kühlkreislaufs einen zusätzlichen Arbeits- und Wartungsaufwand bedeuten und auch die Leckverluste des Kühlmediums dadurch erhöht werden.

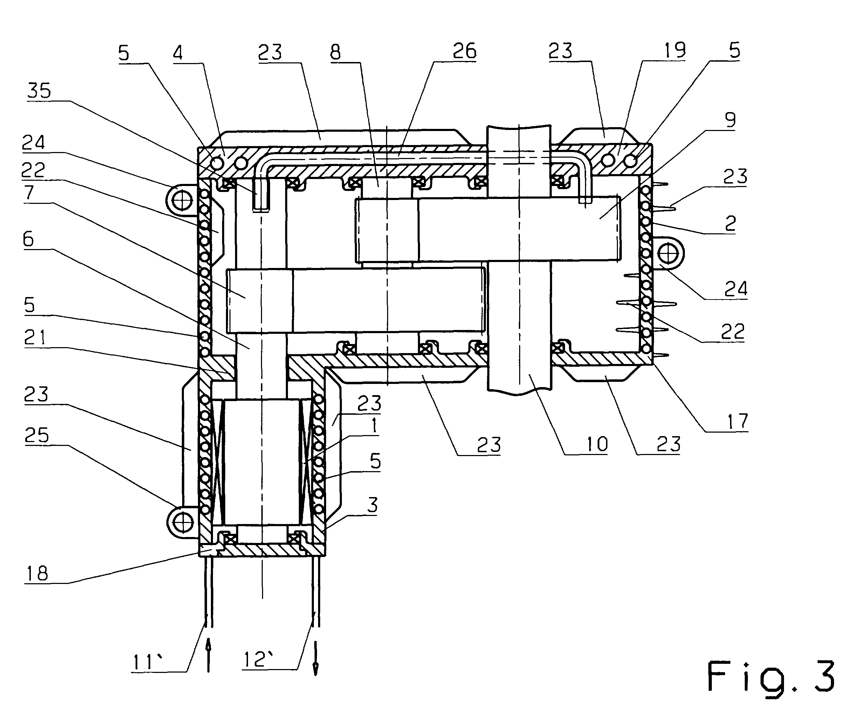

Fig. 3 zeigt eine Ausführungsform eines erfindungsgemäßen Antriebs mit einem gemeinsamen Gehäuse 17 für den Motor 1 und das Getriebe 2 in geschnittener Seitenansicht. In dem Gehäuse 17 sind die Rohre 20 zur Bildung des gemeinsamen Kühlkreislaufs für den Motor 1 und das Getriebe 2 integriert. Auch die Labyrinthdichtung 21 welche den Getrieberaum gegenüber dem Motorraum abdichtet, kann in einem Arbeitsgang mit dem Gehäuse 17 hergestellt werden. Dasselbe gilt für allfällige Rippen 22 an der Innenseite des Gehäuses oder Rippen 23 an der Außenseite des Gehäuses. Auch die Getriebeaufhängung 24 und die Motoraufhängung 25 kann zum Beispiel mit dem Gehäuse 17 mitgegossen werden. Im Falle des Einsatzes einer Rotorwellenkühlung des Motors 1 mit Hilfe des Getriebeöls kann auch die Leitung zur Förderung des Getriebeöls in die Rotorwelle im Gehäuse 17 vorgesehen sein und mit diesem in einem Arbeitsgang hergestellt werden. Auch im Lagerschild 18 und im Getriebedeckel 19 können Strukturen, wie Rippen od. dgl. aber auch Leitungen vorgesehen sein. Fig. 3 zeigt eine Leitung 26 zur Einbringung des Getriebeöls aus dem Getrieberaum in die hohl ausgeführte Motorwelle 6 zu deren Kühlung. Zur Vermeidung externer Pumpen erfolgt die Förderung des Getriebeöls aus dem Getriebekasten vorteilhafterweise automatisch über die Drehung des Großrades 9. Die Zuleitung 11' und die Rückleitung 12' für das Kühlmedium zur Kühlung des äußeren Teils des Motors 1 sowie des Getriebes 2 sind in der dargestellten Ausführungsform im Lagerschild 18 vorgesehen. Die Zuleitung 11' und Rückleitung 12' wird mit einer Pumpe und dem Reservoir des Kühlmediums verbunden.

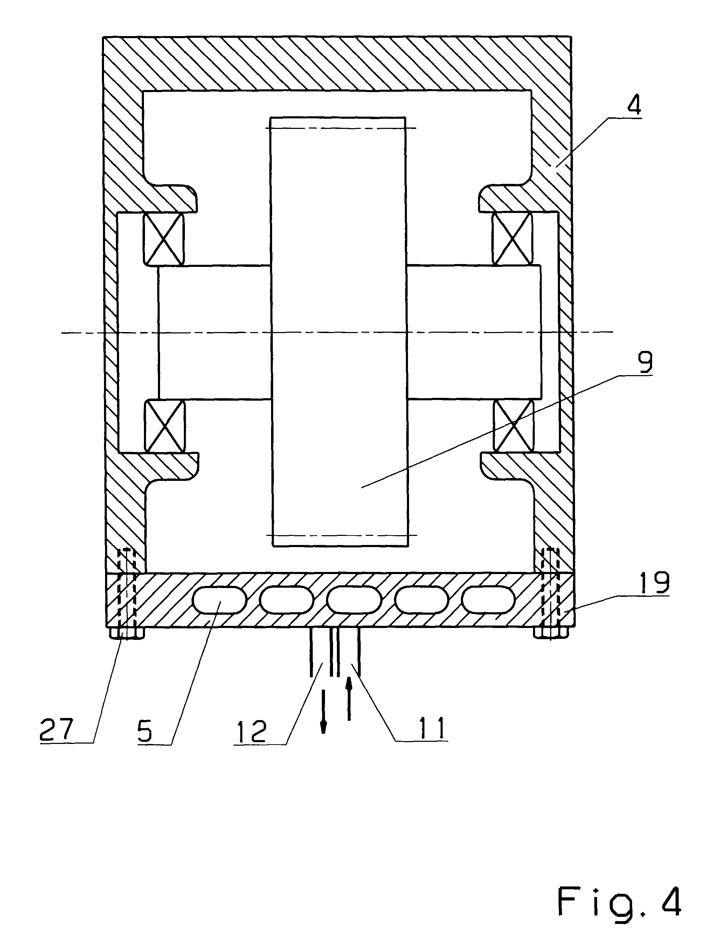

Fig. 4 zeigt eine andere Ausführungsvariante des Getriebegehäuses 4, wobei der Getriebedeckel 19 über Verbindungsschrauben 27 lösbar mit dem Getriebegehäuse 4 verbunden ist. Im Getriebedeckel 19 sind Kühlkanäle 5 integriert, welche mit mindestens einer nach außen führenden Zuleitung 11 und mindestens einer Rückleitung 12 verbunden sind, sodaß ein geschlossener Kühlkreislauf gebildet wird.

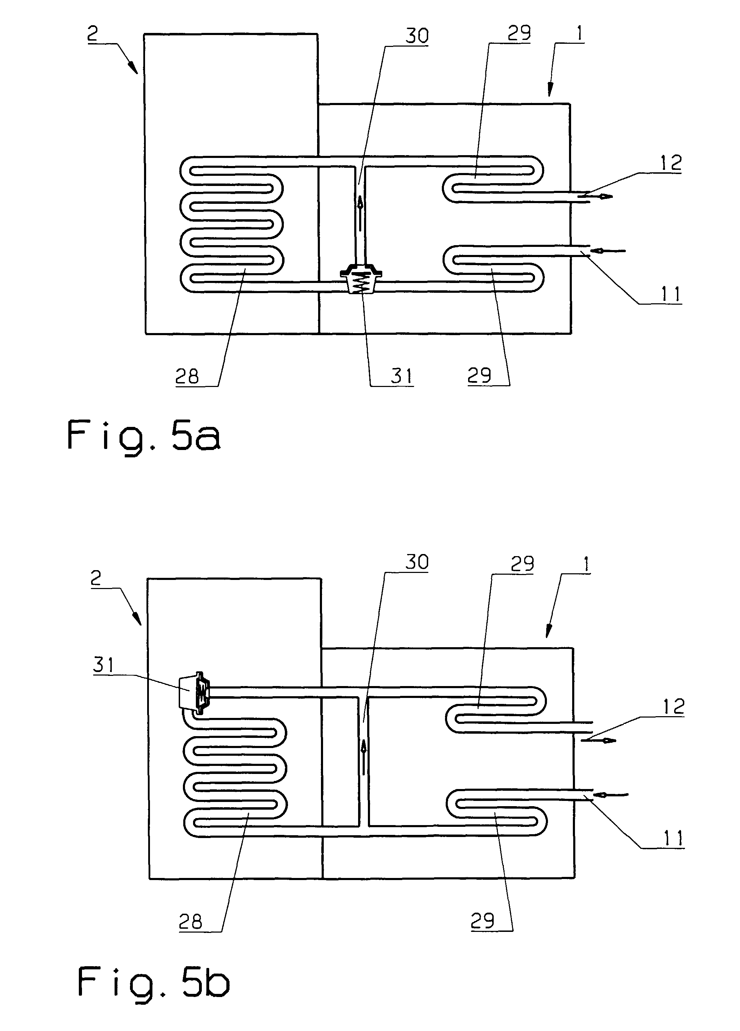

Fig. 5a bis 5d zeigen schematisch verschiedene Varianten einer kombinierten Getriebe-Motorkühlung mit integriertem Thermostat. Durch die Anordnung eines Thermostats kann erreicht werden, daß das Getriebe erst bei Erreichen einer optimalen Betriebstemperatur gekühlt wird und somit die optimalen Eigenschaften des Getriebeöls ausgenützt werden können. Gemäß Fig. 5a ist der Getriebekühlkreislauf 28 mit dem Motorkühlkreislauf 29 verbunden. Über die Zuleitung 11 wird das Kühlmedium in den Kühlkreislauf eingebracht und über die Rückleitung 12 wieder abgeführt. Parallel zum Getriebekühlkreislauf 28 ist eine Überbrückungsleitung 30 angeordnet, welche mit Hilfe eines Ventils 31 od. dgl. verschlossen werden kann. Dabei kann das Ventil 31 od. dgl. ähnlich wie beim Kühler eines Kraftfahrzeuges über eine Bi-Metallfeder bei erreichen einer bestimmten Temperatur automatisch geschlossen werden. Erfindungsgemäß wird die Überbrückungsleitung 30 bei der für das Getriebeöl optimalen Temperatur verschlossen, sodaß dann das Kühlmedium auch durch den Getriebekühlkreislauf 28 gelangt und einer weiteren Erhöhung der Temperatur im Getriebe entgegenwirkt. Durch entsprechende Querschnittswahl der Überbrückungsleitung 30 wird erreicht, daß bei geöffnetem Ventil 31 das Kühlmedium im wesentlichen ausschließlich über die Überbrückungsleitung 30 fließt und nicht durch den Getriebekühlkreislauf 28, ohne daß ein zweites Ventil im Getriebekühlkreislauf erforderlich wird.

Fig. 5b zeigt eine Variante der thermostatgeregelten Getriebekühlung, bei der das Ventil 31 od. dgl. im Getriebekühlkreislauf 28 angeordnet ist. Bei Erreichen der optimalen Betriebstemperatur des Getriebes öffnet das Ventil 31 od. dgl., sodaß das Kühlmedium durch den Getriebekühlkreislauf 28 fließen kann. Andernfalls wird das Kühlmedium durch die Überbrückungsleitung 30 geführt, sodaß keine Kühlung des Getriebes erfolgt.

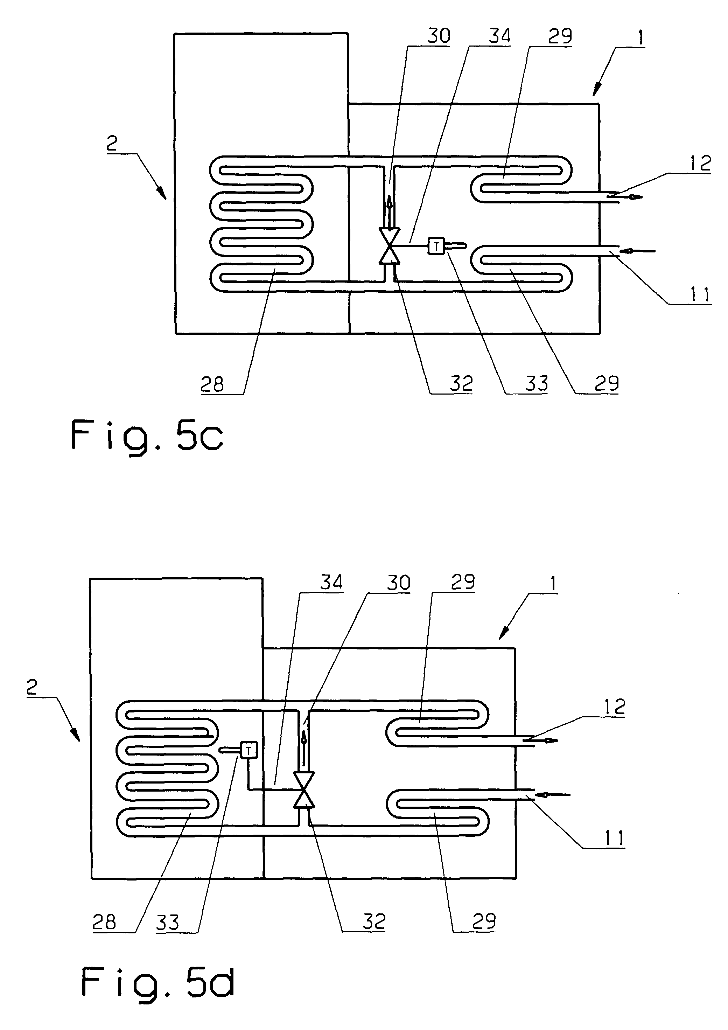

Gemäß Fig. 5c und 5d kann das Ventil 32 auch als elektromechanisches Ventil ausgeführt sein und mit einem Temperatursensor 33 über eine elektrische Leitung 34 verbunden sein. Entsprechend Fig. 5d ist der Temperatursensor 33 vorzugsweise innerhalb des Getriebes 2 zur Messung dessen Betriebstemperatur angeordnet.

Die Erfindung ist insbesondere auf Traktionsantriebe von Schienenfahrzeugen ausgerichtet, bei denen hohe Leistungen und auch hohe Wärmeverluste auftreten. Die elektrischen Maschinen können als Asynchronmaschine, Synchronmaschine, Gleichstrommaschine oder Transversalflußmaschine vorliegen und als Innenläufer oder Außenläufer ausgebildet sein. Eine Anwendung bei anderen Antrieben, z.B. Verbrennungskraftmaschinen ist ebenfalls möglich.

## Patentansprüche

1. Antrieb mit einem in einem Motorgehäuse (3) angeordneten Motor (1) und einem daran angeschlossenen, in einem Getriebegehäuse (4) angeordneten Getriebe (2), allenfalls mit einem mit dem Getriebegehäuse (4) lösbar verbundenen Getriebedeckel (19), wobei zumindest in einem Teil des Getriebegehäuses (4) und bzw. oder im Getriebedeckel (19) Kühlkanäle (5) zur Führung eines vorzugsweise flüssigen Kühlmittels angeordnet sind, dadurch gekennzeichnet, daß die Kühlkanäle (5) im Getriebegehäuse (4) und bzw. oder Getriebedeckel (19) mit Kühlkanälen im Motorgehäuse (3) zur Kühlung des Motors (1) verbunden sind.

2. Antrieb nach Anspruch 1, dadurch gekennzeichnet, daß die Kühlkanäle (5) im Getriebegehäuse (4) und bzw. oder Getriebedeckel (19) integriert sind.

3. Antrieb nach Anspruch 1 oder 2, dadurch gekennzeichnet, daß eine Überbrückungsleitung (30) parallel zu dem durch die Kühlkanäle (5) des Getriebegehäuses (4) und bzw. oder Getriebedeckels (19) gebildeten Getriebekühlkreislauf (28) vorgesehen ist, wobei in dieser Überbrückungsleitung (30) oder in zumindest einem der Kühlkanäle (5) des Getriebes ein Ventil (31, 32) od. dgl. zur Unterbrechung des Durchflusses des vorzugsweise flüssigen Kühlmittels angeordnet ist.

4. Antrieb nach Anspruch 3, dadurch gekennzeichnet, daß das Ventil (31, 32) als elektronisches Ventil ausgebildet und mit einem vorzugsweise im Getriebegehäuse (4) angeordneten Temperatursensor (33) verbunden ist.

5. Antrieb nach einem der Ansprüche 1 bis 4, dadurch gekennzeichnet, daß das Getriebegehäuse (3) an der, dem Motor (1) zugewandten Seite Leitungen (13, 14) aufweist, welche mit den Kühlkanälen (5) im Getriebegehäuse (4) verbunden sind, sodaß dicsc mit allfälligen Kiihlkanälen im Motorgehäuse (3) verbindbar sind.

6. Antrieb nach einem der Ansprüche 1 bis 5. dadurch gekennzeichnet, daß das Motorgehäuse (3) und das Getriebegehäuse (4) einstückig als gemeinsames Gehäuse (17) ausgebildet sind, wobei in dem gemeinsamen Gehäuse (17) die Kühlkanäle (5) und allenfalls eine Überbrückungsleitung (30) angeordnet sind.

7. Antrieb nach Anspruch 6, dadurch gekennzeichnet daß im gemeinsamen Gehäuse (17) des Motors (1) und des Getriebes (2) eine berührungslose Dichtung, z.B. eine Labyrinthdichtung (21) zur Abdichtung des Getrieberaumes gegenüber dem Motorraum vorgesehen ist.

8. Antrieb nach Anspruch 6 oder 7, dadurch gekennzeichnet, daß auf dem gemeinsamen Gehäuse (17), allenfalls auf dem Getriebedeckel (19) und allenfalls auf einem mit dem Motorgehäuse (3) lösbar verbundenen Lagerschild (18) innenseitig und/oder außenseitig Rippen (22, 23) od. dgl. zur Versteifung und bzw. oder Verbesserung der Kühlwirkung angeordnet sind.

9. Antrieb nach einem der Ansprüche 1 bis 8, dadurch gekennzeichnet, daß die Kühlkanäle (5) im Getriebegehäuse (4), Motorgehäuse (3) oder gemeinsamen Gehäuse (17), allfällige Überbrückungsleitungen (30), Leitungen (13, 14, 15, 16), Zuleitungen (11, 11') und Rückleitungen (12, 12') sowie allfällige Rippen (22, 23) od. dgl. im Getriebegehäuse (4), Motorgehäuse (3) oder gemeinsamen Gehäuse (17) mit diesem in einem Arbeitsvorgang durch Gießen oder Sintem hergestellt sind.

10. Antrieb nach Anspruch 9, dadurch gekennzeichnet, daß die Kühlkanäle (5), allfällige Überbrückungsleitungen (30), Leitungen (13, 14, 15, 16), Zuleitungen (11, 11') und Rückleitungen (12, 12') durch Rohre (20) gebildet sind, welche aus einem Material mit höherem Schmelzpunkt als das Material des Getriebegehäuses (4), Motorgehäuses (3) oder gemeinsamen Gehäuses (17) bestehen.
